Europäisches Patentamt

European Patent Office

Office européen des brevets

(19)

(11) Veröffentlichungsnummer: **0 186 094**
**B1**

(12) **EUROPÄISCHE PATENTSCHRIFT**

(45) Veröffentlichungstag der Patentschrift: **12.09.90**

(21) Anmeldenummer: **85116053.1**

(22) Anmeldetag: **17.12.85**

(51) Int. Cl.⁵: **H 01 S 3/102**, H 01 S 3/14, H 01 S 3/20

(54) **Laser mit durchstimmbarer Emissionswellenlänge.**

(30) Priorität: **24.12.84 DE 3447311**

(43) Veröffentlichungstag der Anmeldung:
**02.07.86 Patentblatt 86/27**

(45) Bekanntmachung des Hinweises auf die Patenterteilung:
**12.09.90 Patentblatt 90/37**

(84) Benannte Vertragsstaaten:
**DE FR IT NL**

(56) Entgegenhaltungen:
**DE-A-2 150 221**
**DE-B-2 214 870**
**US-A-3 842 368**
**US-A-3 913 033**

(73) Patentinhaber: **Firma Carl Zeiss**
**D-7920 Heidenheim (Brenz) (DE)**

(72) Erfinder: **Müller, Gerhard, Prof. Dr.**
**Philipp-Funk-Strasse 112**
**D-7080 Aalen (DE)**

Courier Press, Leamington Spa, England.

EP 0 186 094 B1

**Beschreibung**

Die vorliegende Erfindung betrifft einen Laser mit durchstimmborer Emissionswellenlänge. Solche Laser bestehen üblicherweise aus einem, einen Farbstoff als laseraktives Material enthaltenden Resonator, einer Pumplichtquelle und einem wellenlängendispersiven Glied, das als Gitter oder Etalon ausgebildet sein kann und das zur Variation der Emissionswellenlänge mechanisch bewegt wird.

Der Einsatz solcher mechanisch bewegter Teile bringt technische Schwierigkeiten, insbes. bezüglich Justierung und Änderung der Resonator- bzw. Pumpgeometrie mit sich.

Es ist die Aufgabe der vorliegenden Erfindung einen Laser zu schaffen, der eine Durchstimmung der Emissionswellenlänge ohne Verwendung mechanisch bewegter Teile im Resonatorraum ermöglicht.

Diese Aufgabe wird, ausgehend von einem Laser, der aus einem, laseraktives Material enthaltenden Resonator und einer Pumplichtquelle besteht, durch eine Ausbildung entsprechend dem kennzeichnenden Teil des Anspruches 1 gelöst.

Bei dem Laser nach der Erfindung besteht das laseraktive Material, im Resonatorraum aus zwei Substanzen unterschiedlicher Dispersion, deren Dispersionskurven sich bei mindestens einer Wellenlänge schneiden. Diese Wellenlänge ist dann gleich der Emissionswellenlänge des Lasers.

Die Dispersionskurven der beiden Substanzen sind in ihrem Verlauf temperatur- und/oder druck- bzw. dichteabhängig. Damit lassen sich diese Kurven und damit ihr Schnittpunkt und auch die Emissionswellenlänge des Lasers durch Variation der Temperatur und/oder des Druckes bzw. der Dichte der Substanzen im Resonatorraum verschieben.

Es sind sogenannte Dispersionsfilter (Christiansen-Filter) bekannt, bei denen eine Filterküvette beispielsweise ein Pulver aus optischem Glas und eine Flüssigkeit enthält, wobei diese Substanzen unterschiedliche Dispersion aufweisen. Die Filtersubstanzen sind so gewählt, daß sich ihre Dispersionskurven bei einer bestimmten Wellenlänge schneiden. Alle Strahlung dieser Wellenlänge wird durchgelassen, da die beiden Substanzen hier gleiche Brechungsindices haben. Strahlung anderer Wellenlänge wird an den vielen Grenzflächen zwischen Flüssigkeit und Glas reflektiert und kann das Filter nicht passieren. Es ist bekannt, daß sich bei solchen Dispersionsfiltern die Wellenlänge der durchgelassenen Strahlung mit der Temperatur ändert, so daß zur Konstanthaltung der Filter-Wellenlänge die Temperatur des Filters auf ca. 0,1° K konstant gehalten wird (ABC der Optik, 1961, Seiten 184/185).

Die Erfindung basiert auf der überraschenden Erkenntnis, daß das einem Dispersionsfilter zugrundeliegende physikalische Prinzip auch bei einem Laser Anwendung finden kann und hier den Bau eines Lasers ermöglicht, bei dem die Emissionswellenlänge ohne Verwendung mechanisch bewegter wellenlängendispersiver Glieder durchstimmbar ist.

Bei dem Laser nach der Erfindung liegt eine Substanz als Granulat vor, wobei der Durchmesser der Granulatkörner zwischen einem Vielfachen einer Wellenlänge aus dem Durchstimmbereich und dem mm-Bereich liegen kann. Ist die als Granulat vorliegende feste Substanz laseraktiv, so kann sie beispielsweise aus Neodym-Glas bestehen. Die zweite Substanz ist dann zweckmäßig ein Fluid, beispielsweise Nitrobenzen. Ein solcher Laser emittiert im nahen Infrarot bei ca. 1 μm.

Ein, im infraroten Spektralbereich emittierender Laser, kann beispielsweise als Granulat Kobalt-dotiertes $ZnF_2$ ($Co^{2+}$: $ZnF_2$) enthalten, während als Fluid $CCl_4$ verwendet wird.

Ein Laser bei dem die flüssige Substanz laseraktiv ist, enthält beispielsweise in der Flüssigkeit den Farbstoff Rodamin, während das Granulat aus Quarz besteht.

Anstelle einer flüssigen zweiten Substanz kann auch eine solche aus einem gasförmigen Stoff Verwendung finden. Bei diesem erfolgt zweckmäßig die Durchstimmung der Emissionswellenlänge über eine Variation des Gas-Druckes.

Es ist auch möglich die zweite Substanz im Resonator als Festkörper auszubilden, beispielsweise durch Einbetten von granuliertem oder gepulvertem Neodymglas in NaCl.

Bei einem Laser mit einer Flüssigkeit als zweiter Substanz läßt sich diese so wählen, daß das Verstärkungsprofil des Lasers eine vorbestimmte Bandbreite hat. Verlaufen die Dispersionskurven von Flüssigkeit und Granulat sehr ähnlich, so berühren sie sich über einen bestimmten Wellenlängenbereich, der die Bandbreite des Verstärkungsprofils definiert. Bei sehr unterschiedlichem Verlauf der Dispersionskurven schneiden sich diese praktisch bei einer Wellenlänge, der Emissionswellenlänge des Lasers.

Wählt man eine Flüssigkeitskomponente so, daß sie im Wellenlängenbereich des Pumplichts eine Absorptionsbande aufweist, so tritt anomale Dispersion auf und damit können in jedem Falle zwei Schnittpunkte in der Dispersionskurve des Granulats und somit zwei Emmissionswellenlängen auftreten. Man erhält einen Laser, der gleichzeitig Strahlung zweier Wellenlängen emittiert. Gegebenenfalls kann eine dieser Wellenlängen mittels eines außerhalb des Resonators im Strahlengang angeordneten Filters eliminiert werden.

Wird bei dem Laser nach der Erfindung die Durchstimmung der Emissionswellenlänge über eine Variation der Temperatur bewirkt, so ist es zweckmäßig das aus Granulat und flüssiger Substanz bestehende Materialgemisch, das eine breiartige Masse darstellt ständig umzupumpen. Pumpen für solche breiartigen Massen sind bekannt. In der Pumpleitung wird ein Thermostat angeordnet, mit dem es möglich ist einen vorgegebenen Temperaturwert genau einzuhalten oder die Temperatur der fließenden Masse und damit die Emissionswellenlänge des Lasers gesteuert zu variieren.

Es ist auch möglich den Durchmesser der Granulatkörner der ersten Substanz etwas größer (mm-Bereich) zu wählen und nur die fluide zweite Substanz umzupumpen. Eine Variation der Emissionswellenlänge kann dann auch durch sequentiellen Einsatz verschiedener fluider Substanzen oder durch Änderung der Konzentration einer solchen Substanz erreicht werden.

Eine Erhöhung der Temperatur des Materialgemisches im Resonatorraum kann beispielsweise über eine für das Pumplicht optisch transparente Widerstands-Aufdampfschicht auf dem Umfang der Resonator-Küvette erfolgen. Versieht man die Granulatkörner der festen Substanz, beispielsweise durch Dotierung mit MgO mit einer selektiven Absorptionsbande im infraroten Bereich, die zwischen 7 und 10 μm liegt, so ist eine Temperaturerhöhung durch Einstrahlung entsprechender Infrarotstrahlung möglich.

Bei dem Laser nach der Erfindung werden die Resonatorspiegel breitbandig ausgebildet. Diese können zweckmäßig direkt als Abschlußfenster der Resonator-Küvette verwendet werden. Dadurch wird ein sehr kompakter Aufbau des Lasers möglich.

Das Pumplicht für den erfindungsgemäßen Laser wird vorteilhaft so gewählt, daß bei der Wellenlänge oder im Wellenlängenbereich des Pumplichts die Dispersionskurven der Substanzen im Resonator keine Schnittstelle aufweisen. Damit wird das Pumplicht sehr stark und diffus im gesamten Resonatorvolumen gestreut, so daß eine sehr gute Intensitätsverteilung des Pumplichts in diesem Volumen erreicht wird.

Die Erfindung wird im folgenden anhand der Fig. 1—5 der beigefügten Zeichnung näher erläutert. Im einzelnen zeigen:

Fig. 1 ein Ausführungsbeispiel des Lasers nach der Erfindung;

Fig. 2 die Dispersionskurven der beiden im Resonatorraum des Lasers der Fig. 1 enthaltenen Substanzen bei unterschiedlichen Temperaturen;

Fig. 3 die Dispersionskurven von zwei Substanzen im Resonatorraum eines nach der Erfindung ausgebildeten Farbstoff-Lasers;

Fig. 4 die Dispersionskurven von zwei anderen Substanzen im Resonatorraum eines nach der Erfindung ausgebildeten Farbstoff-Lasers;

Fig. 5 ein weiteres Ausführungsbeispiel des Lasers.

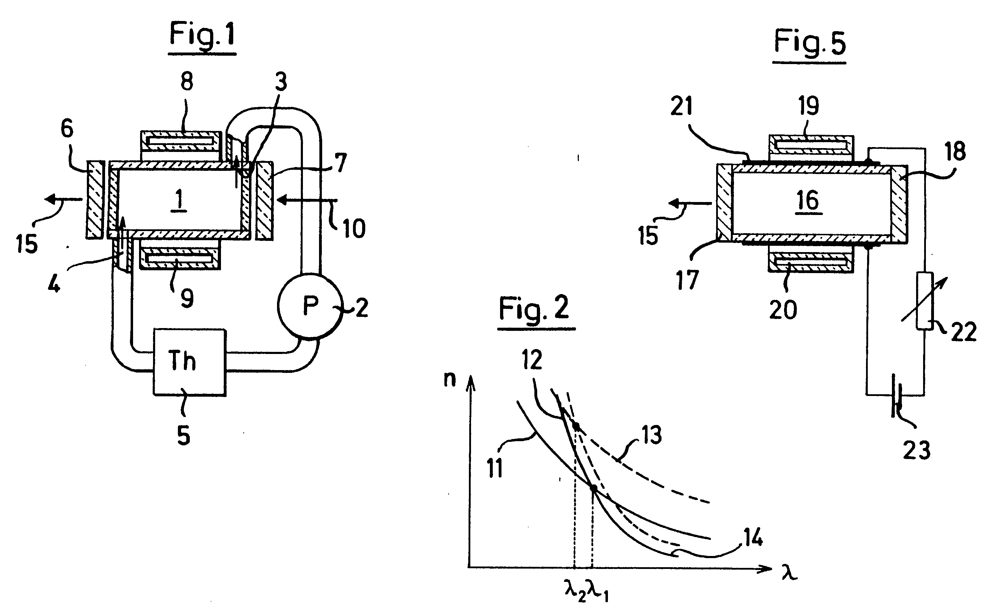

In Fig. 1 ist mit 1 eine Küvette bezeichnet, die laseraktives Material enthält. Dieses besteht im dargestellten Beispiel aus einer ersten festen Substanz, die als fein granuliertes Neodym-Glas vorliegt und einer zweiten, als Fluid vorliegenden Substanz, beispielsweise Nitrobenzen. Dieses Substanzgemisch hat breiige Konstistenz und wird mittels einer Pumpe 2 ständig umgepumpt. Auf ihrem Weg vom Ausgang 3 der Küvette 1 über die Pumpe 2 zum Eingang 4 durchströmt das Substanzgemisch einen Thermostaten 5, in dem es auf die gewünschte Temperatur gebracht wird.

Mit 6 und 7 sind die beiden Resonatorspiegel bezeichnet, die breitbandig ausgelegt sind. Mit 8 und 9 sind zwei Pumplichtquellen bezeichnet. In einer bevorzugten Ausführungsform können diese Pumplichtquellen auch aus linearen oder zwei-dimensionalen Arrays von Halbleiterdiodenlasern bestehen. Anstelle dieser Pumplichtquellen kann zum Pumpen des Lasers auch die Ausgangsstrahlung eines zweiten, hier nicht dargestellten Lasers dienen, die schematisch durch den Pfeil 10 angedeutet ist.

Die Dispersionskurven der beiden Substanzen in der Laser-Küvette 1 sind in Fig. 2 gezeigt. Bei einer vorgewählten Temperatur $T_1$ haben die Kurven den mit 11 und 12 bezeichneten Verlauf. Diese Kurven schneiden sich bei der Wellenlänge $\lambda_1$. Wird die Temperatur des Substanzgemisches auf den Wert $T_2$ geändert, so verschieben sich die Dispersionskurven und zeigen jetzt den gestrichelt dargestellten Verlauf 13, 14. Die Kurven 13, 14 schneiden sich bei der Wellenlänge $\lambda_2$.

Im dargestellten Beispiel ist die eine Substanz flüssig; ihre Dispersionskurven 11, 13 zeigen eine relativ große Verschiebung bei Temperaturänderung.

Enthält die Laserküvette 1 des Lasers der Fig. 1 ein Substanzgemisch dessen Dispersionskurven entsprechend Fig. 2 verlaufen, so emittiert der Laser bei der Temperatur $T_1$ eine Strahlung 15 der Wellenlänge $\lambda_1$. Bei Änderung der Temperatur auf den Wert $T_2$ ändert sich die Wellenlänge der emittierten Strahlung auf den Wert $\lambda_2$.

Ändert man die Temperatur des Substanzgemisches in der Laserküvette 1 im Bereich ±50° K, so läßt sich die Emissionswellenlänge je nach Zusammensetzung des Substanzgemisches um ca. 50 nm verschieben. Auch die Bandbreiten des Verstärkungsprofils des Lasers hängt von der Zusammensetzung des Substanzgemisches ab und kann zwischen ca. 0,03 und 3 nm liegen.

Bei dem Laser der Fig. 1 ist das von den Pumplichtquellen 8, 9 bzw. die von einem Pumplaser ausgehende Strahlung 10 so gewählt, daß im Wellenlängenbereich des Pumplichts kein Schnittpunkt der Dispersionskurven (Fig. 2) vorhanden ist. Damit wird das Pumplicht sehr stark und diffus im gesamten Volumen der Laserküvette 1 gestreut, so daß ein guter Anregungs-Wirkungsgrad erreicht wird.

Wird bei dem Laser der Fig. 1 eine Substanz als Flüssigkeit, z.B. als Farbstofflösung gewählt, so können durch die sehr kleinen Schichtdicken der Farbstofflamellen zwischen den Partikeln der festen Substanz, z.B. Quarz oder Quarzglas, keine ausgeprägten Fluktuationen in der Flüssigkeit auftreten. Solche Fluktuationen sind bisher aufgrund der dabei auftretenden Schlierenbildung der Verwendung größerer Farbstoffküvetten im Laserresonator entgegengestanden.

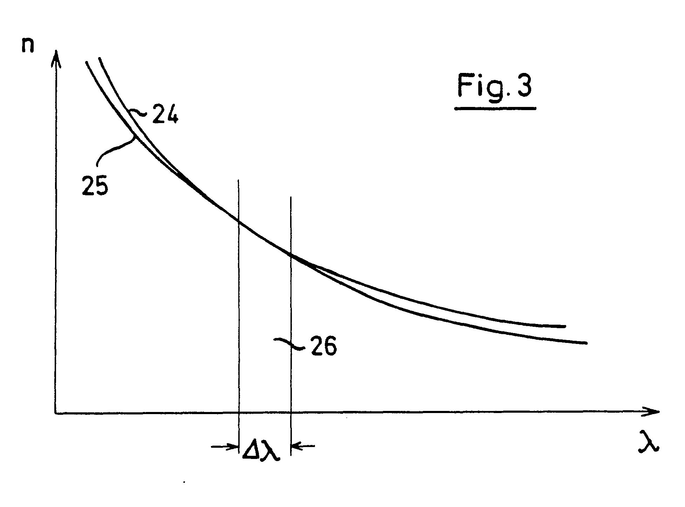

Wählt man die Substanzen eines solchen Farbstofflasers so, daß ihre Dispersionskurven den in Fig. 3 dargestellten beispielsweisen Verlauf haben, so schneiden sich die Kurven 24 des Granulats und 25 der Farbstofflösung nicht in einem genau definierten Punkt; sie berühren sich praktisch innerhalb des mit 26 bezeichneten Bereiches. Dieser Bereich der Breite Δλ liegt die Bandbreite des Verstärkungsprofils des Lasers fest. Es ist ohne weiteres zu sehen, daß diese Bandbreite durch den Verlauf der Dispersionskurven festgelegt ist.

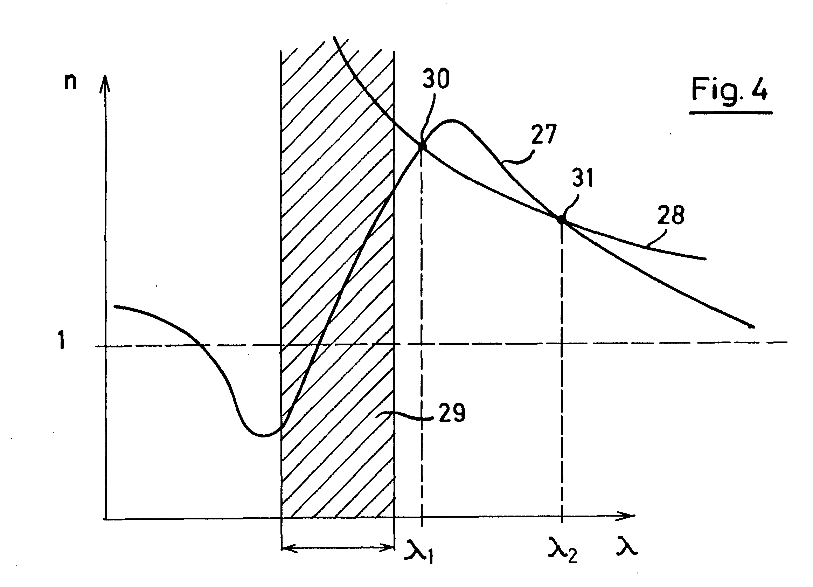

Beim Ausführungsbeispiel der Fig. 4 ist die Farbstofflösung so gewählt, daß sie anomale Dispersion hat. Im Bereich 29 liegt eine Absorptionsbande. Dadurch hat die Dispersionskurve 27 der Farbstofflösung einen solchen Verlauf, daß zwei Schnittpunkte 30 und 31 mit der Dispersionskurve 28 des Granulats auftreten. Der Laser emittiert damit Strahlung der beiden Wellenlängen $\lambda_1$ und $\lambda_2$.

Bei dem in Fig. 5 dargestellten Ausführungsbeispiel enthält das in der Laserküvette 16 befindliche Substanzgemisch als feste Substanz ein Granulat aus Quarz und als flüssige Substanz eine Lösung des Farbstoffs Rodamin. Die Resonatorspiegel 17, 18 bilden direkt die Abschlußfenster der Küvette 16, so daß dieser Laser sehr kompakt aufgebaut ist. Mit 19, 20 sind Pumplichtquellen bezeichnet.

Die Laserküvette 16 ist auf ihrem Mantel mit einer für das Pumplicht transparenten elektrischen Widerstandsschicht 21 versehen. An diese wird über das schematisch gezeichnete Steuerglied 22 eine Stromquelle 23 angelegt. Damit läßt sich über das Steuerglied 22 die Temperatur des Substanzgemisches in der Küvette 16 beeinflussen.

Wird das Substanzgemisch in der Laserküvette 16 mit einem festen Granulat aus Quarzglas aufgebaut, das eine Absorptionsbande im infraroten Bereich aufweist, die zwischen 5 und 50 µm liegt, so ist eine Temperaturänderung des Substanzgemisches auch durch Einstrahlung entsprechender Infrarotstrahlung möglich. Die Strahlungsquellen 19, 20 sind dann entsprechend ausgestaltet.

Wird bei dem Laser der Fig. 3 nicht die flüssige, sondern die feste Substanz aus laseraktivem Material hergestellt, z.B. aus einem Urandotiertem $MgF_2$-Granulat ($U^{3+}$: $MgF_2$), so kann, speziell bei Emissionswellenlängen im Infraroten die zweite Substanz auch gasförmig sein. Dies bietet die Möglichkeit die Durchstimmbarkeit des Lasers nicht nur über die Temperatur, sondern auch über eine Druckänderung der Gaskomponente zu erzielen. Dazu wird das Gas zweckmäßig ähnlich wie beim Ausführungsbeispiel der Fig. 1 umgepumpt.

Die Verwendung einer Mischung aus einem Granulat und einer fluiden oder festen zweiten Substanz als laseraktives Medium im Laserresonator ist nicht nur auf die hier dargestellten Ausbildungen eines Lasers beschränkt, sondern findet zweckmäßige Anwendung auch bei Lasern mit einer anderen Geometrie, beispielsweise bei Verwendung einer kugelförmigen Laserküvette.

## Patentansprüche

1. Laser mit durchstimmbarer Emissionswellenlänge, bestehend aus einem laseraktives Material enthaltenden Resonator und einer Pumplichtquelle, dadurch gekennzeichnet, daß das im Resonator enthaltene Material aus der Mischung einer als Granulat vorliegenden ersten Substanz mit einer zweiten Substanz besteht, wobei mindestens eine dieser Substanzen laseraktiv ist, daß die in ihrem Verlauf temperatur- und/oder druck- bzw. dichteabhängigen Dispersionskurven (11, 12 bzw. 13, 14) der Brechungsindices der beiden Substanzen mindestens einen Schnittpunkt ($\lambda_1$, $\lambda_2$) haben, der der Emissionswellenlänge entspricht, und daß zur Wahl der Emissionswellenlänge eine Einrichtung (2, 5) zur Variation von Temperatur und/oder Druck der Substanzmischung vorgesehen ist.

2. Laser nach Anspruch 1, dadurch gekennzeichnet, daß die zweite Substanz als Flüssigkeit vorliegt.

3. Laser nach Anspruch 2, dadurch gekennzeichnet, daß die Flüssigkeit einen laseraktiven Farbstoff enthält.

4. Laser nach Anspruch 3, dadurch gekennzeichnet, daß eine der Substanzkomponenten im Wellenlängenbereich des Pumplichts anomale Dispersion aufweist.

5. Laser nach Anspruch 1, dadurch gekennzeichnet, daß die zweite Substanz gasförmig ist.

6. Laser nach Anspruch 1, dadurch gekennzeichnet, daß die zweite Substanz als Festkörper vorliegt.

7. Laser nach Anspruch 1 bis 5, dadurch gekennzeichnet, daß das Substanzgemisch über eine Pumpe (2) laufend durch den Resonator-Raum (1) des Lasers bewegt wird, und daß im Pump-Kreislauf ein Thermostat (5) vorgesehen ist.

8. Laser nach Anspruch 1 bis 6, dadurch gekennzeichnet, daß mindestens eine der Substanzen eine selektive Absorptionsbande im infraroten Bereich aufweist, und daß zur Temperaturregelung im Bereich dieser Absorptionsbande emittierende Strahlungsquellen (19, 20) vorgesehen sind.

9. Laser nach einem oder mehreren der Ansprüche 1 bis 8, dadurch gekennzeichnet, daß der Resonator von einer Küvette (16) gebildet ist, deren Abschlußfenster als breitbandige Resonatorspiegel (17, 18) ausgebildet sind.

## Revendications

1. Laser émis sur une longueur d'onde à fréquence variable, composé d'un résonateur qui renferme le matériau actif et d'une source de lumière de pompage, caractérisé par le fait que le matériau contenu dans le résonateur est constitué par le mélange d'une première substance granulée avec une seconde substance, dont l'une au moins doit être le centre actif, que les courbes de dispersion (11, 12 et 13, 14) des indices de réfraction des deux substances, décrites en fonction de la température et/ou de la pression ou de la densité en présence, se croisent au moins en un point ($\lambda_1$, $\lambda_2$) qui correspond à la longueur de l'émission laser, et qu'un dispositif (2, 5) est prévu pour faire varier la température et/ou la pression du mélange de deux substances, en vue de sélectionner la longueur d'onde d'émission laser.

2. Laser conçu selon la spécification 1, caractérisé par le fait que le seconde substance est liquide.

3. Laser conçu selon la spécification 2, caractérisé par le fait que le liquide contient un colorant qui sert de milieu actif.

4. Laser conçu selon la spécification 3, caractérisé par le fait que l'un des composants de la substance présente une dispersion anomale dans la plage spectrale de la lumière de pompage.

5. Laser conçu selon la spécification 1, caractérisé par le fait que la seconde substance est gazeuse.

6. Laser conçu selon la spécification 1, caractérisé par le fait que la seconde substance est solide.

7. Laser conçu selon les spécifications énoncées de 1 à 5, caractérisé par le fait que le mélange de substances circule en permanence dans la cavité résonnante (1) du laser sous l'action d'une pompe (2) et qu'un thermostat (5) est installé dans le circuit de pompage.

8. Laser conçu selon les spécifications énoncées de 1 à 6, caractérisé par le fait que l'une des substances au moins présente une bande d'absorption sélective dans l'infrarouge et que des sources émettrices de rayons infrarouges (19, 20) sont prévues dans la plage de cette bande d'absorption pour régler la température.

9. Laser conçu selon l'une ou plusieurs des spécifications énoncées de 1 à 8, caractérisé par le fait que le résonateur est formé d'une cuve (16) dont les fenêtres de fermeture sont élaborées sous forme de miroirs à large bande.

**Claims**

1. A laser with tunable emission wavelength, consisting of a resonator containing laser-active material and a pumping light source, characterized in that the material contained in said resonator consists of a mixture of a first substance, present as a granulate together with a second substrate, at least one of said substances being laser-active, that the dispersion curves (11, 12 resp. 13, 14) have a course which is dependent on temperature and/or pressure, respectively density and have at least one intersection point $(\lambda_1, \lambda_2)$ which corresponds to the wavelength of emission, and that for electing the wavelength of emission there is provided a device (2, 5) for varying the temperature and/or the pressure of said substance mixture.

2. A laser according to claim 1, characterized in that the second substance is present in liquid form.

3. A laser according to claim 2, characterized in that the liquid contains a laser-active dye.

4. A laser according to claim 3, characterized in that one component of said substance mixture has a dispersion anomaly in the wavelength region of the pumping light.

5. A laser according to claim 1, characterized in that the second substance is present in gaseous form.

6. A laser according to claim 1, characterized in that the second substance is present as a solid.

7. A laser according to claims 1 to 5, characterized in that the substance mixture is moved continuously via a pump (2) through the resonator (1), and that a thermostat (5) is provided in the pump circuit.

8. A laser according to claims 1 to 6, characterized in that at least one of said substances has a selective absorption band in the infrared region and that radiation sources (19, 20) which emit in the region of said absorption band are provided for temperature control.

9. A laser according to one or several of claims 1 to 8, characterized in that the resonator is formed by a cell (16) having a closure window which is developed as a broadband resonator mirror (17, 18).

## Fig.1

## Fig.5

## Fig. 2

EP 0 186 094 B1

Fig. 3

Fig. 4